# EUROPEAN PATENT APPLICATION

(11) **EP 3 715 915 A1**
(43) Date of publication of application: **30.09.2020**
(21) Application number: 18881541.9
(22) Date of filing: 09.08.2018
(51) Int. Cl.: G01V 5/00, G01N 23/02

(54) **SCANNING DEVICE AND VEHICLE-MOUNTED RADIATION INSPECTION SYSTEM**

(30) Priority: 21.11.2017 CN 201711167451
(71) Applicant: Nuctech Company Limited, Beijing 100084 (CN)
(72) Inventor: FAN, Xuping, Beijing 100084 (CN); SONG, Quanwei, Beijing 100084 (CN)
(74) Representative: Held, Stephan
(86) International application number: PCT/CN2018/099592
(87) International publication number: WO 2019/100760

(57) **Abstract**

A radiation scanning device and a vehicle-mounted radiation inspection system are provided. The radiation scanning device includes: a horizontal supporting arm; a vertical detection arm, which is rotatably connected to the horizontal supporting arm through a rotating shaft, and has a folded position and an unfolded position relative to the horizontal supporting arm, wherein the vertical detection arm has a central axis line perpendicular to the rotating shaft; and torque balance components arranged on both sides of the central axis line; and the vertical detection arm abuts against the horizontal supporting arm through the torque balance components at the unfolded position to maintain balance in a horizontal plane. The radiation scanning device in the embodiment of the present disclosure has high detection precision and can improve the detection accuracy.

## Description

### Cross-Reference to Related Applications

The present application claims the priority of Chinese Application No. 201711167451.4, filed in the Chinese Patent Office on November 21, 2017, and entitled "RADIATION SCANNING DEVICE AND VEHICLE-MOUNTED RADIATION INSPECTION SYSTEM", the entire contents of which are herein incorporated by reference.

### Field of the Invention

The present disclosure relates to the technical field of scanning detection equipment, and in particular to a radiation scanning device and a vehicle-mounted radiation inspection system.

### Background of the Invention

With the growth of global trade, the quantity required for containers is increasing. More goods are transported and traded in containers. In order to prevent contraband such as weapons, explosives, illegal drugs or precious metals from being hidden in the containers, but the containers cannot be opened for detection at the same time, the problem can be well solved by the nonintrusive detection to the containers using a ray scanning system. The ray scanning system typically includes a horizontal supporting arm and a vertical detection arm. When the ray scanning system is required for a detection work, the vertical detection arm gradually unfolds under the driving of a driving device. When the vertical detection arm is unfolded to a predetermined position, but the driving device continues to apply a pulling force to the vertical detection arm, the vertical detection arm will twist around its own axis in the horizontal plane, so that a detector arranged on the vertical detection arm cannot accurately receive rays, which leads to errors in detection results and low detection accuracy.

### Summary of the Invention

Some embodiments of the present disclosure provide a radiation scanning device and a vehicle-mounted radiation inspection system. The radiation scanning device has high detection precision and can improve the detection accuracy.

One aspect of the embodiment of the present disclosure provides a radiation scanning device, including: a horizontal supporting arm; a vertical detection arm, which is rotatably connected to the horizontal supporting arm through a rotating shaft, and has a folded position and an unfolded position relative to the horizontal supporting arm, wherein a central axis line of the vertical detection arm is perpendicular to the rotating shaft; and torque balance components arranged on both sides of the central axis line; and the vertical detection arm is configured to abut against the horizontal supporting arm through the torque balance components at the unfolded position to maintain balance in a horizontal plane.

According to one aspect of the embodiments of the present disclosure, the torque balance components include a first limiting component and a second limiting component, which fit with each other, one of the first limiting component and the second limiting component is arranged on the horizontal supporting arm, and the other is arranged on the vertical detection arm.

According to one aspect of the embodiments of the present disclosure, the first limiting component includes a limiting column, and the second limiting component includes a limiting block, or, the first limiting component includes a limiting block, and the second limiting component includes a limiting column.

According to one aspect of the embodiments of the present disclosure, the top of the limiting column includes a spherical surface, and the limiting block includes a concave surface or a convex surface matching the spherical surface.

According to one aspect of the embodiments of the present disclosure, the first limiting component is of a columnar structure having a connection end and a free end, the diameter of the free end is greater than the diameter of the connection end, and the second limiting component includes an accommodating hole provided with an opening and for accommodating the free end.

According to one aspect of the embodiments of the present disclosure, the second limiting component includes a body and a snap ring connected to the body, the accommodating hole is formed in the body, the free end is configured to be inserted into the accommodating hole by passing through the snap ring for clamping the free end.

According to one aspect of the embodiments of the present disclosure, the snap ring includes a plurality of arc-shaped segments, each of the plurality of arc-shaped segments is slidably connected to the body, and each the plurality of arc-shaped segments is configured to reciprocate along the radial direction of the accommodating hole.

According to one aspect of the embodiments of the present disclosure, a positioning hole is formed in an area corresponding to each of the plurality of arc-shaped segments on the body, the positioning hole communicates with the accommodating hole, each of the plurality of arc-shaped segments includes a convex portion inserted into the positioning hole, the second limiting component further includes a reset member arranged in the positioning hole, and the reset member abuts against the convex portion.

According to one aspect of the embodiments of the present disclosure, the reset member includes a spring and a spring seat connected to the spring, the spring seat is connected to the body, and the spring is arranged between the convex portion and the spring seat.

According to one aspect of the embodiments of the present disclosure, the second limiting component further includes a pressure sensor arranged on the hole wall of the accommodating hole.

According to one aspect of the embodiments of the present disclosure, the radiation scanning device further includes a first magnetic component and a second magnetic component, which are configured to be attracted to each other, the first magnetic component is arranged on the horizontal supporting arm, and the second magnetic component is arranged on the vertical detection arm.

The radiation scanning device according to the embodiment of the present disclosure includes the horizontal supporting arm, the vertical detection arm and the torque balance components. The horizontal supporting arm is rotatably connected to the vertical detection arm through a rotating shaft. The vertical detection arm has the folded position and the unfolded position relative to the horizontal supporting arm. Both the vertical detection arm and the horizontal supporting arm have central axis lines perpendicular to the rotating shaft. When the vertical detection arm and the horizontal supporting arm are at the folded position, the central axis lines of the two are parallel to each other. When the vertical detection arm and the horizontal supporting arm are at the unfolded position, the central axis lines of the two are perpendicular to each other. The torque balance components are arranged on the both sides of the central axis line of the vertical detection arm. When the vertical detection arm rotates to a vertical state, the vertical detection arm abuts against the horizontal supporting arm through the torque balance components. Under the action of the torque balance components, the respective torques on the both sides of the central axis line of the vertical detection arm are equal, and the directions are opposite, so that the vertical detection arm does not twist horizontally around its own central axis line, but maintains a balanced state, in this way, the vertical detection arm is maintained at an optimal detection position as a whole, and the detection accuracy is improved.

In another aspect, the embodiments of the present disclosure provide a vehicle-mounted radiation inspection system, including a vehicle body and the above-mentioned radiation scanning device arranged on the vehicle body.

### Brief Description of the Drawings

The features, advantages and technical effects of the exemplary embodiments of the present disclosure will be described below with reference to the drawings.
Fig. 1 is a top view of a radiation scanning device in a folded state according to one embodiment of the present disclosure;
Fig. 2 is a perspective view of a radiation scanning device in a working state according to one embodiment of the present disclosure;
Fig. 3 is a schematic diagram of a local structure of a radiation scanning device according to one embodiment of the present disclosure;
Fig. 4 is a schematic diagram of a local structure of a radiation scanning device according to another embodiment of the present disclosure;
Fig. 5 is a partial enlarged drawing of a site A in Fig. 4;
Fig. 6 is a schematic diagram of a sectional structure of a site B-B in Fig. 4;
Fig. 7 is a structural schematic diagram of a connection state of a horizontal supporting arm and a vertical detection arm according to one embodiment of the present disclosure;
Fig. 8 is a partial enlarged drawing of a site C in Fig. 7;
Fig. 9 is a perspective view of a vehicle-mounted radiation inspection system in a working state according to one embodiment of the present disclosure.

In the drawings, the drawings are not drawn to actual scale.

### Reference Signs:

1, vertical supporting arm; 2, horizontal supporting arm; 3, vertical detection arm; 31. detector;
4, torque balance components; 41, first limiting component; 411, connecting portion; 412, abutting portion; 411', connection end; 412', free end; 42, second limiting component; 421 accommodating hole; 422, body; 422a, positioning hole; 423, snap ring; 423a, arc-shaped segment; 424, first inclined plane; 425, transitional surface; 426, second inclined plane; 427, reset member; 427a, spring; 427b, spring seat; 428, convex portion; 429, pressure sensor; 5, driving rod; 6, first magnetic component; 7, second magnetic component; 8, vehicle body; 98, rotating shaft; 99, central axis line.

### Detailed Description of the Embodiments

The embodiments of the present disclosure are described in further detail below with reference to the drawings and embodiments. The detailed description and drawings of the following embodiments are used to exemplarily illustrate the principle of the present disclosure, but cannot be used to limit the scope of the present disclosure, that is, the present disclosure is not limited to the described embodiments.

In the description of the present disclosure, it should be noted that, unless otherwise stated, the meaning of "plurality" is two or more; orientation or positional relationships indicates by terms "upper", "lower", "left", "right", "inner", "outer" and the like are only for the convenience of describing the present disclosure and simplifying the description, rather than indicating or implying that the device or element referred to must have a particular orientation or be constructed and operated in a particular orientation, and thus cannot be interpreted as limitations to the present disclosure. In addition, the terms "first", "second" and the like are used for descriptive purposes only, and should not be interpreted as indicating or implying relative importance.

In the description of the present disclosure, it should also be noted that the terms "installation", "connected" and "connection" should be understood in a broad sense unless otherwise specified and limited, for example, the connection can be a fixed connection and can also be a detachable connection or an integral connection; and the connection can be a direct connection and can also be a connection via an intermediate medium. For those of ordinary skill in the art, the specific meanings of the above terms in the present disclosure can be understood according to specific situations.

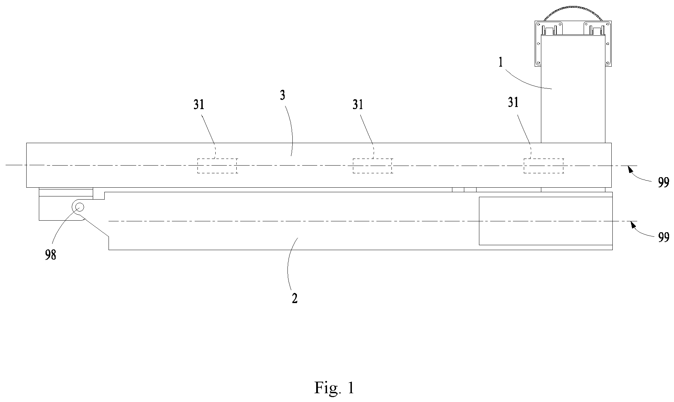

In order to better understand the present disclosure, a radiation scanning device according to an embodiment of the present disclosure will be described in detail below with reference to Fig. 1 to Fig. 9.

The radiation scanning device according to the embodiment of the present disclosure is mainly used for scanning and detecting objects to be detected, such as containers or vehicles, so as to quickly and effectively check whether target articles exist in the containers or the vehicles.

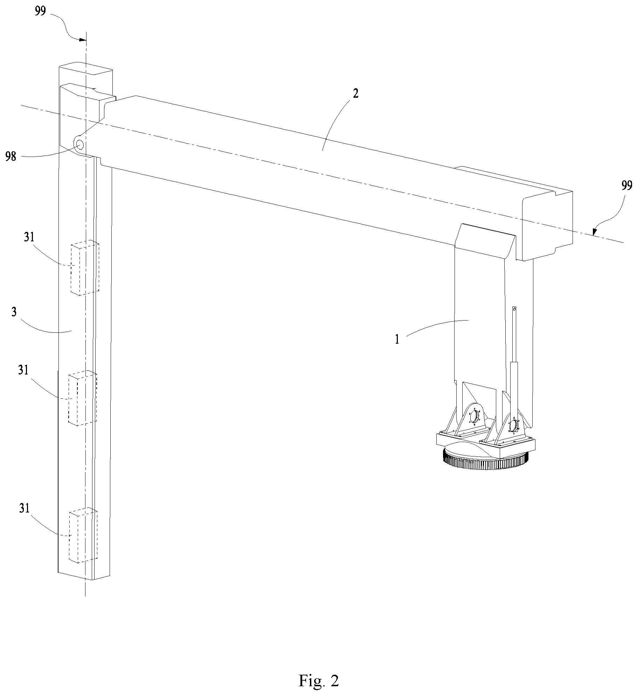

As shown in Fig. 1 and Fig. 2, the radiation scanning device according to the embodiment of the present disclosure includes a vertical supporting arm 1, a horizontal supporting arm 2 and a vertical detection arm 3, which are sequentially connected. The vertical detection arm 3 has a folded position and an unfolded position relative to the horizontal supporting arm 2. When the radiation scanning device switches from a folded state to an unfolded state, the vertical supporting arm 1 can switch from a horizontal state to a vertical state, meanwhile, the vertical supporting arm 1 and the horizontal supporting arm 2 are perpendicular to each other, and the vertical detection arm 3 and the horizontal supporting arm 2 are perpendicular to each other. In this way, the vertical supporting arm 1, the horizontal supporting arm 2 and the vertical detection arm 3 can form a frame-type structure. The object to be detected can pass through the frame-type structure to be scanned and detected by rays. Optionally, the vertical supporting arm 1, the horizontal supporting arm 2 and the vertical detection arm 3 in the present embodiment can be of solid columnar structures or hollow columnar structures.

The vertical detection arm 3 and the horizontal supporting arm 2 in the present embodiment are rotationally connected through a rotating shaft 98. The vertical detection arm 3 can rotate relative to the horizontal supporting arm 2 to switch between the folded position and the unfolded position. The vertical detection arm 3 and the horizontal supporting arm 2 in the present embodiment both have central axis lines 99 perpendicular to the rotating shaft 98. When the vertical detection arm 3 and the horizontal supporting arm 2 are at the folded position, their respective central axis lines 99 are parallel to each other. When the vertical detection arm 3 and the horizontal supporting arm 2 are at the unfolded position, their respective central axis lines 99 are perpendicular to each other. Preferably, the respective central axis lines 99 of the vertical detection arm 3 and the horizontal supporting arm 2 are located in the same plane.

A detector 31 is arranged on the vertical detection arm 3 in the present embodiment. The detector 31 is used for receiving the rays. The radiation scanning device according to the embodiment of the present disclosure further includes torque balance components 4. The torque balance components 4 can keep the vertical detection arm 3 at the unfolded position at a predetermined position to prevent the vertical detection arm 3 from twisting in the horizontal plane, thereby avoiding a deviation of ray receiving angle of the detector 31, and ensuring that the detector 31 remains at an optimal ray receiving position, in order to accurately receive the ray dose passing through the object to be detected and to guarantee the detection accuracy of the vertical detection arm 3.

The torque balance components 4 in the present embodiment are arranged on both sides of the central axis line 99 of the vertical detection arm 3, so that the torque balance components 4 can apply acting forces to the areas of the vertical detection arm 3 on the both sides of the central axis line 99. The horizontal torques formed by the respective acting forces in the areas on the both sides of the central axis line 99 of the vertical detection arm 3 deviating from the central axis 99 are equal, so that the vertical detection arm 3 at the unfolded position does not twist around central axis line 99 thereof in the horizontal plane due to the unbalanced stresses in the areas on the both sides of the central axis line 99. In this way, the detector 31 arranged in the vertical detection arm 3 is at a predetermined ray receiving position, and the ray receiving angle is optimal to ensure the detection accuracy.

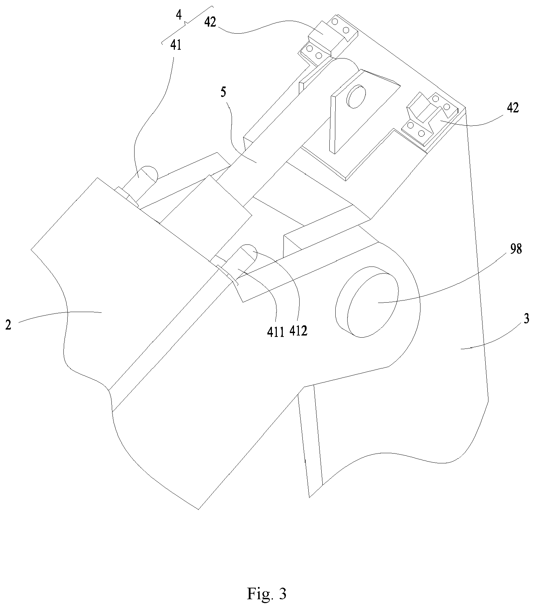

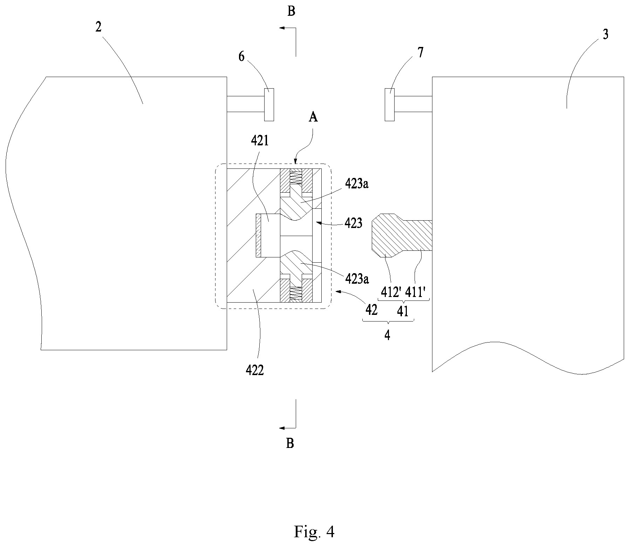

As shown in Fig. 3 and Fig. 4, the torque balance components 4 in the present embodiment include a first limiting component 41 and a second limiting component 42, which fit with each other. The first limiting component 41 and the second limiting component 42 limit each other, so that accurate positioning of the vertical detection arm 3 can be ensured. One of the first limiting component 41 and the second limiting component 42 is arranged on the horizontal supporting arm 2, and the other is arranged on the vertical detection arm 3. When the vertical detection arm 3 rotates to the unfolded position around the rotating shaft 98, the first limiting component 41 abuts against the second limiting component 42, thereby preventing the vertical detection arm 3 from continuing to unfold and maintaining the vertical detection arm 3 in the vertical state, at this time, the central axis line 99 of the vertical detection arm 3 is perpendicular to the central axis line 99 of the horizontal supporting arm 2. At the same time, after the first limiting component 41 abuts against the second limiting component 42, the stresses in the areas of the vertical detection arm 3 on the both sides of its own central axis line 99 are balanced, and the generated torques are equal to prevent the vertical detection arm 3 from twisting in the horizontal plane.

In one embodiment, the end portion of the vertical detection arm 3 close to the horizontal supporting arm 2 includes a first mounting surface and a second mounting surface. The first mounting surface and the second mounting surface are respectively located on the both sides of the own central axis line 99 of the vertical detection arm 3. The first mounting surface and the second mounting surface are both provided with the first limiting components 41. The second limiting components 42 are arranged at the end portion of the horizontal supporting arm 2 close to the vertical detection arm 3, and are arranged corresponding to the number and positions of the first limiting components 41. When the vertical detection arm 3 rotates to the unfolded position relative to the horizontal supporting arm 2, the first limiting components 41 accurately abut against the second limiting components 42, so that the first mounting surface and the second mounting surface of the vertical detection arm 3 are subject to pressure stresses. The horizontal torque formed by the pressure stress on the first mounting surface of the vertical detection arm 3 deviating from the central axis line 99 of the vertical detection arm 3 is equal to the horizontal torque formed by the pressure stress on the second mounting surface of the vertical detection arm 3 deviating from the central axis line 99 of the vertical detection arm 3, so that the vertical detector 31 keeps balance in the horizontal plane, thereby preventing the vertical detection arm 3 from twisting horizontally around central axis line 99 thereof.

In one embodiment, the radiation scanning device includes a driving rod 5. The horizontal supporting arm 2 is of a hollow columnar structure. The driving rod 5 is arranged in the horizontal supporting arm 2. The axis line of the driving rod 5 is parallel or coincident with the central axis line 99 of the horizontal supporting arm 2. The free end of the driving rod 5 is hinged with the end portion of the vertical detection arm 3 that is rotationally connected to the horizontal supporting arm 2. The driving rod 5 includes a plurality of telescopic segments. Each of the telescopic segments of the driving rod 5 performs telescopic motion to drive the vertical detection arm 3 to rotate around the rotating shaft 98. The first mounting surface and the second mounting surface of the vertical detection arm 3 are respectively located on the both sides of the driving rod 5. Optionally, the number of the first limiting components 41 is two, one of which is arranged on the first mounting surface, and the other is arranged on the second mounting surface. Correspondingly, the number of the second limiting components 42 is two, one of which is arranged on one side of the driving rod 5, and the other is arranged on the other side of the driving rod 5.

In one embodiment, the first limiting component 41 is arranged on the horizontal supporting arm 2, and the second limiting component 42 is arranged on the vertical detection arm 3. The first limiting component 41 includes a limiting column. The second limiting component 42 includes a limiting block. The limiting column in the present embodiment includes two opposite end portions, one of which is a connecting portion 411, and the other is an abutting portion 412. The connection portion 411 is connected and fixed with the horizontal supporting arm 2. The abutting portion 412 is in a free state. When the vertical detection arm 3 rotates to the unfolded position, the limiting block can directly abut against the abutting portion 412 of the limiting column, so as to realize the mutual limit of the horizontal supporting arm 2 and the vertical detection arm 3 and to ensure that the central axis line 99 of the horizontal supporting arm 2 and the central axis line 99 of the vertical detection arm 3 are perpendicular to each other.

Optionally, the connecting portion 411 is provided with external threads to form a threaded connection with the horizontal supporting arm 2. The end face of the abutting portion 412 is a spherical surface. The limiting block includes a concave surface or a convex surface matching the spherical surface. The limiting block includes a fixing lug. The fixing lug of the limiting block is connected and fixed with the vertical detection arm 3 by screws. When the vertical detection arm 3 rotates to the unfolded position, the concave surface or convex surface of the limiting block directly abuts rigidly against the spherical surface of the limiting column.

Optionally, the first limiting component 41 can also be arranged on the vertical detection arm 3, and the second limiting component 42 is arranged on the horizontal supporting arm 2. The structures of the first limiting component 41 and the second limiting component 42 are the same as those in the foregoing embodiment, and thus details are not described herein again.

In another embodiment, the first limiting component 41 is arranged on the vertical detection arm 3, and the second limiting component 42 is arranged on the horizontal supporting arm 2. The first limiting component 41 includes a connection end 411' and a free end 412'. The radial dimension of the free end 412' is greater than the radial dimension of the connection end 411'. The second limiting component 42 includes an accommodating hole 421 with an opening. The accommodating hole 421 is used for accommodating the free end 412' of the first limiting component 41. When the vertical detection arm 3 rotates to the unfolded position, the free end 412' of the first limiting component 41 can be inserted into the accommodating hole 421 of the second limiting component 42 and pressed against the hole wall of the accommodating hole 421, thereby achieving the mutual limit of the horizontal supporting arm 2 and the vertical detection arm 3, and ensuring that the central axis line 99 of the horizontal supporting arm 2 and the central axis line 99 of the vertical detection arm 3 are perpendicular to each other. The vertical detector 31 at the unfolded position keeps balance in the horizontal plane, thereby preventing the vertical detection arm 3 from twisting horizontally around its own central axis line 99.

Optionally, the first limiting component 41 is of a stepped columnar structure. The diameter of the free end 412' is greater than the diameter of the connection end 411'. The free end 412' can be a frustum structure or a cylindrical structure. The accommodating hole 421 of the second limiting component 42 can be a tapered hole or a cylindrical blind hole.

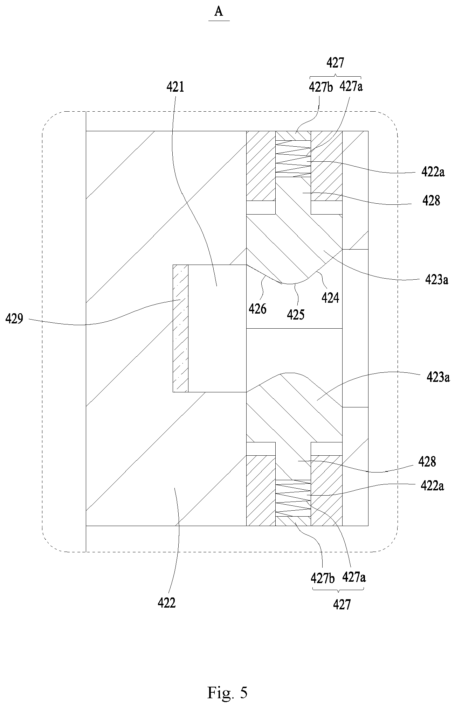

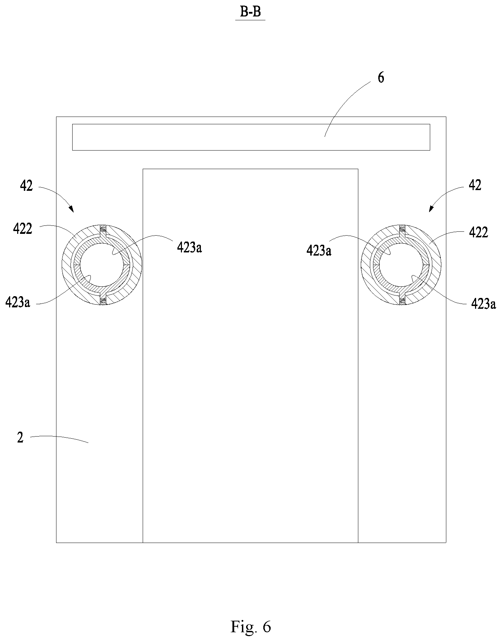

As shown in Fig. 5 and Fig. 6, further, the second limiting component 42 includes a body 422 and a snap ring 423 connected to the body 422. The accommodating hole 421 is formed in the body 422. The snap ring 423 is arranged on the moving path of the free end 412'. When the vertical detection arm 3 rotates to the unfolded position, the free end 412' of the first limiting component 41 is inserted into the accommodating hole 421 by passing through the snap ring 423. After the free end 412' is inserted into the accommodating hole 421, the snap ring 423 can be clamped with the free end 412' to lock the free end 412' in the accommodating hole 421, so as to prevent the free end 412' from detaching from the accommodating hole 421, when the vertical detection arm 3 shakes due to the impact of an external force, therefore, it is ensured that the position of the vertical detection arm 3 remains stable, and the detector 31 normally receives the rays.

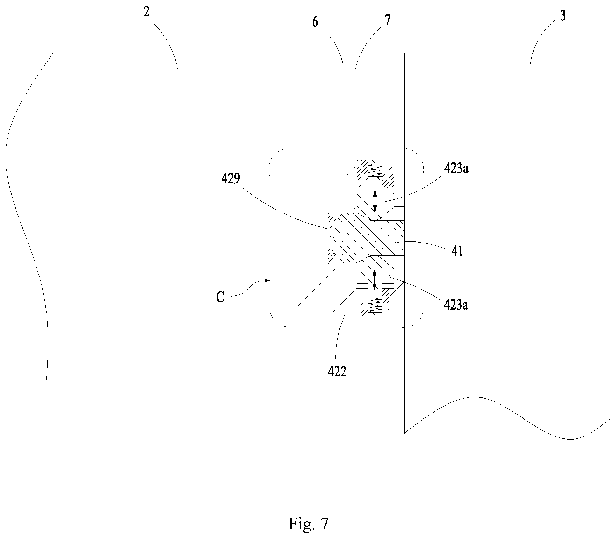

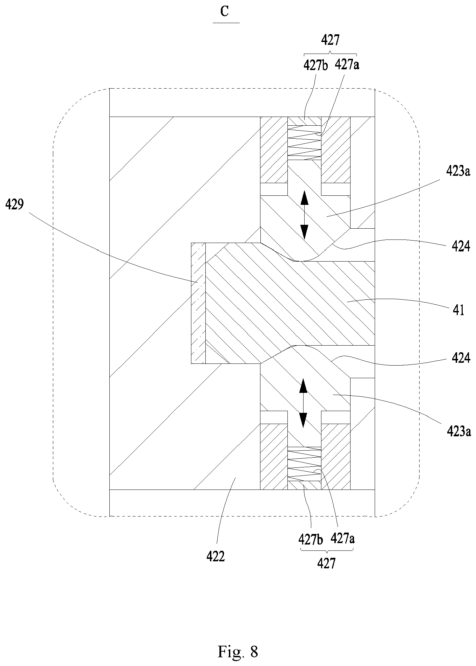

As shown in Fig. 7 and Fig. 8, the snap ring 423 in the present embodiment includes a plurality of arc-shaped segments 423a. Each of the plurality of arc-shaped segments 423a is slidably connected to the body 422. Each of the plurality of arc-shaped segment 423a can reciprocate along the radial direction of the accommodating hole 421. The plurality of arc-shaped segments 423a are distributed around the axis of the accommodating hole 421 and form a complete circular snap ring 423. The plurality of arc-shaped segments 423a are enclosed to form a through hole. Before entering the accommodating hole 421, the free end 412' of the first limiting component 41 firstly pushes each of the plurality of arc-shaped segments 423a to move along the radial direction of the accommodating hole 421 toward the direction away from the axis of the accommodating hole 421, so as to enlarge the diameter of the through hole and avoid the opening of the accommodating hole 421. When the free end 412' passes through the snap ring 423 and enters the accommodating hole 421, each of the plurality of arc-shaped segments 423a moves along the radial direction of the accommodating hole 421 toward the direction close to the axis of the accommodating hole 421, so as to reduce the diameter of the through hole, and then the clamp and lock the free end 412' to prevent the vertical detection arm 3 from driving the free end 412' to withdraw from the accommodating hole 421 while shaking. Optionally, the snap ring 423 includes two, three or four arc-shaped segments 423a.

In the present embodiment, a positioning hole 422a is formed in an area corresponding to each of the plurality of arc-shaped segments 423a on the body 422. The positioning hole 422a communicates with the accommodating hole 421. The axis of the positioning hole 422a is perpendicular to the axis of the accommodating hole 421. Each of the plurality of arc-shaped segments 423a includes a convex portion 428 inserted into the positioning hole 422a. When each of the plurality of arc-shaped segments 423a reciprocates along the radial direction of the accommodating hole 421, the convex portion 428 of each of the plurality of arc-shaped segments 423a moves along the axial direction of the positioning hole 422a. The convex portion 428 of each of the plurality of arc-shaped segments 423a is limited by the positioning hole 422a to ensure that each of the plurality of arc-shaped segments 423a maintains a stable position during the reciprocating process.

Optionally, as shown in Fig. 5, the arc-shaped segment 423a includes a first inclined plane 424, a transitional surface 425 and a second inclined plane 426, which are successively distributed along the axial direction of the accommodating hole 421. The end face of the free end 412' of the first limiting component 41 away from the connection end 411' is provided with a slope surface having the same gradient as the first inclined plane 424, so that the slope surface of the free end 412' of the first limiting component 41 and the first inclined plane 424 slide relatively, and then it is easier to push the arc-shaped segment 423a to move into the accommodating hole 421. The end face of the free end 412' of the first limiting component 41 facing to the connection end 411' is provided with a slope surface having the same gradient as the second inclined plane 426, so that after the free end 412' is inserted into the accommodating hole 421, the second inclined plane 426 is fitted with the slope surface. When the vertical detection arm 3 needs to return from the unfolded position to the folded position, the vertical detection arm 3 can drive the free end 412' of the first limiting component 41 to move, so that the slope surface of the free end 412' and the second inclined plane 426 slide relatively. In this way, the free end 412' of the first limiting component 41 can push the arc-shaped segment 423a to move and withdraw from the accommodating hole 421 with less effort. The transitional surface 425 is an arc surface, so that during the process of inserting or withdrawing the free end 412' of the first limiting component 41 from the accommodating hole 421, the relative sliding friction resistance between the transitional surface 425 and the peripheral surface of the free end 412' is small, which is conducive to inserting into or pulling out the free end 412' from the accommodating hole 421, and at the same time, the plurality of arc-shaped segments 423a generate no scratch on the peripheral surface of the free end 412', thereby ensuring the integrity of the peripheral surface of the free end 412'.

The second limiting component 42 in the present embodiment further includes a reset member 427 arranged in the positioning hole 422a. The reset member 427 abuts against the convex portion 428. The reset member 427 can drive the arc-shaped segment 423a to automatically reset, thereby improving the degree of automation. After the free end 412' of the first limiting component 41 is inserted into the accommodating hole 421, the reset member 427 actively drives the arc-shaped segment 423a to move toward the axis of the accommodating hole 421 along the radial direction of the accommodating hole 421, so that the arc-shaped segment 423a returns to the initial position to clamp the free end 412'.

Optionally, the reset member 427 includes a spring 427a and a spring seat 427b connected to the spring 427a. The spring seat 427b is connected to the body 422. The spring seat 427b can be connected to the body 422 by screws, or, the spring seat 427b can be provided with threads, and the positioning hole 422a is provided with internal threads. The spring seat 427b is in threaded connection with the body 422 directly. The spring 427a is arranged between the convex portion 428 and the spring seat 427b. One end of the spring 427a is connected to the convex portion 428 of the arc-shaped segment 423a, and the other end thereof is connected to the spring seat 427b. When the free end 412' of the first limiting component 41 abuts against the arc-shaped segment 423a to cause the arc-shaped segment 423a to depart from the axis of the accommodating hole 421 along the radial direction of the accommodating hole 421, the convex portion 428 of the arc-shaped segment 423a can compress the spring 427a, so that the spring 427a accumulates elastic potential energy. After the free end 412' of the first limiting component 41 is inserted into the accommodating hole 421, the spring 427a releases the elastic potential energy to drive the arc-shaped segment 423a to move toward the axis of the accommodating hole 421 along the radial direction of the accommodating hole 421. In one example, the spring 427a is a coil spring.

The second limiting component 42 in the second embodiment further includes a pressure sensor 429. The pressure sensor 429 is arranged on the hole wall of the accommodating hole 421 and is used for detecting a pressure value of the free end 412' of the first limiting component 41 abutting against the hole wall of the accommodating hole 421, so as to judge whether the free end 412' of the first limiting component 41 is accurately inserted into the accommodating hole 421 and reaches a predetermined position, then, whether the vertical detection arm 3 is accurately unfolded to the predetermined unfolded position is judged, and the level of automation of the radiation scanning device is improved. Optionally, the pressure sensor 429 can be a pressure strain gauge, and the pressure strain gauge is attached to the hole wall of the accommodating hole 421. When the accommodating hole 421 is a tapered hole, the pressure strain gauge is attached to a wall surface of the tapered hole. When the accommodating hole 421 is a cylindrical blind hole, the accommodating hole 421 includes a bottom wall and a side wall. The pressure strain gauge is attached to the bottom wall.

The radiation scanning device in the present embodiment further includes a first magnetic component 6 and a second magnetic component 7. The first magnetic component 6 is arranged on the horizontal supporting arm 2. The second magnetic component 7 is arranged on the vertical detection arm 3. When the vertical detection arm 3 rotates relative to the horizontal supporting arm 2 to the unfolded position, the first limiting component 41 and the second limiting component 42 fit to locate the position of the vertical detecting arm 3, and at the same time, the first magnetic component 6 and the second magnetic component 7 are connected by mutual suction. The first magnetic component 6 and the second magnetic component 7 after the suction connection can keep a stable relative position between the horizontal supporting arm 2 and the vertical detection arm 3. When the vertical detection arm 3 shakes due to the impact of external stress, the vertical detection arm 3 is connected to the horizontal supporting arm 2 as a whole through the first magnetic component 6 and the second magnetic component 7, therefore the shaking amplitude of the vertical detection arm 3 is small, and shaking of the vertical detection arm 3 can be stopped quickly to avoid the situation that the vertical detection arm 3 cannot perform the scanning detection work due to the excessive shaking time, thereby improving the adaptive capacity and the detection working efficiency of the vertical detection arm 3, and meanwhile avoiding the first limiting component 41 and the second limiting component 42 detaching from the connection state due to the excessive shaking amplitude of the vertical detection arm 3.

Optionally, when the vertical detection arm 3 is at the unfolded position, the first magnetic component 6 and the second magnetic component 7 are located above the first limiting component 41 and the second limiting component 42. In one example, the first magnetic component 6 includes a first connecting rod and a first magnet. The first magnet is of a strip-shaped structure and extends along the axis of the rotating shaft 98. The second magnetic component 7 includes a second connecting rod and a second magnet. The second magnet is of a strip-shaped structure and extends along the axis of the rotating shaft 98. In another example, the first magnetic component 6 includes a first connecting rod and a first electromagnet. The first electromagnet is of a strip-shaped structure and extends along the axis of the rotating shaft 98. The second magnetic component 7 includes a second connecting rod and a second electromagnet. The second electromagnet is of a strip-shaped structure and extends along the axis of the rotating shaft 98.

The radiation scanning device according to the embodiment of the present disclosure further includes a rotating platform arranged at one end of the vertical supporting arm 1 away from the horizontal supporting arm 2 and an oil cylinder connecting the rotating platform and the vertical supporting arm 1. One end of the oil cylinder is rotationally connected to the rotating platform through a rotating shaft, and the other end thereof is rotationally connected to the vertical supporting arm 1 through a rotating shaft. The oil cylinder can drive the vertical supporting arm 1 to fold to the horizontal state or unfold to the vertical state.

The radiation scanning device according to the embodiment of the present disclosure includes the horizontal supporting arm 2, the vertical detection arm 3 and the torque balance components 4. The horizontal supporting arm 2 is rotatably connected to the vertical detection arm 3 through the rotating shaft 98. The vertical detection arm 3 has the folded position and the unfolded position relative to the horizontal supporting arm 2. Both the vertical detection arm 3 and the horizontal supporting arm 2 have central axis lines 99 perpendicular to the rotating shaft 98. When the vertical detection arm 3 and the horizontal supporting arm 2 are at the folded position, the central axis lines 99 of the two are parallel to each other. When the vertical detection arm 3 and the horizontal supporting arm 2 are at the unfolded position, the central axis lines 99 of the two are perpendicular to each other. The torque balance components 4 are arranged on the both sides of the central axis line 99 of the vertical detection arm 3. When the vertical detection arm 3 rotates to the vertical state, the vertical detection arm 3 abuts against the horizontal supporting arm 2 through the torque balance components 4. Under the action of the torque balance components 4, the respective torques in the areas on the both sides of the central axis line 99 of the vertical detection arm 3 are equal, and the directions are opposite, so that the vertical detection arm 3 does not twist horizontally around central axis line 99 thereof, but maintains a balanced state, in this way, the vertical detection arm 3 is maintained at an optimal detection position as a whole, and the detection accuracy is improved.

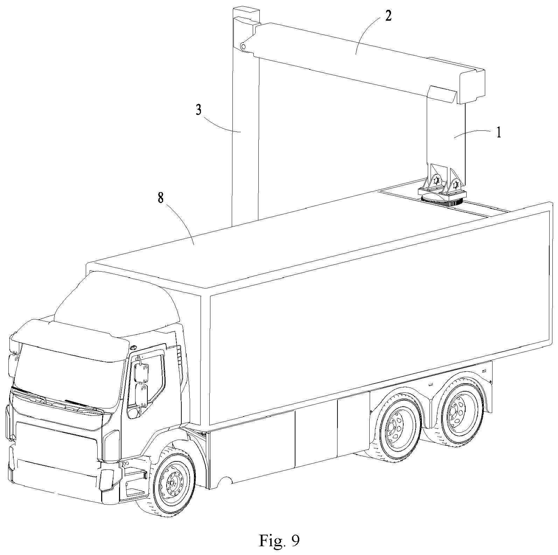

As shown in Fig. 9, the embodiment of the present disclosure further provides a vehicle-mounted radiation inspection system, including a vehicle body 8 and the radiation scanning device in the above embodiments arranged on the vehicle body 8. The vehicle body 8 can carry the radiation scanning device to move to realize rapid changing site, and a scanning channel is quickly constructed at a predetermined position to carry out scanning detection work. The vehicle-mounted radiation inspection system is flexible and high in adaptive capacity. Since the vertical detection arm 3 of the radiation scanning device can still maintain a stable position at the unfolded position, the detection accuracy of the vehicle-mounted radiation inspection system is high.

Although the present disclosure has been described with reference to the preferred embodiments, various modifications can be made thereto and the components therein can be replaced with equivalents without departing from the scope of the present disclosure. In particular, as long as there is no structural conflict, various technical features mentioned in the various embodiments can be combined in any manner. The present disclosure is not limited to the specific embodiments disclosed herein, but includes all technical solutions falling within the scope of the claims.

## Claims

1. A radiation scanning device, comprising:
a horizontal supporting arm;
a vertical detection arm, which is rotatably connected to the horizontal supporting arm through a rotating shaft, and has a folded position and an unfolded position relative to the horizontal supporting arm, wherein a central axis line of the vertical detection arm is perpendicular to the rotating shaft; and
torque balance components arranged on both sides of the central axis line; and
wherein the vertical detection arm is configured to abut against the horizontal supporting arm through the torque balance components at the unfolded position to maintain balance in a horizontal plane.

2. The radiation scanning device according to claim 1, wherein the torque balance components comprise a first limiting component and a second limiting component, which fit with each other, one of the first limiting component and the second limiting component is arranged on the horizontal supporting arm, and the other is arranged on the vertical detection arm.

3. The radiation scanning device according to claim 2, wherein the first limiting component comprises a limiting column, and the second limiting component comprises a limiting block; or, the first limiting component comprises a limiting block, and the second limiting component comprises a limiting column.

4. The radiation scanning device according to claim 3, wherein the end face of one end portion of the limiting column comprises a spherical surface, and the limiting block comprises a concave surface or a convex surface matching the spherical surface.

5. The radiation scanning device according to claim 2, wherein the first limiting component is of a columnar structure having a connection end and a free end, the radial dimension of the free end is greater than the radial dimension of the connection end, and the second limiting component comprises an accommodating hole provided with an opening and for accommodating the free end.

6. The radiation scanning device according to claim 5, wherein the second limiting component comprises a body and a snap ring connected to the body, the accommodating hole is formed in the body, the free end is configured to be inserted into the accommodating hole by passing through the snap ring for clamping the free end.

7. The radiation scanning device according to claim 6, wherein the snap ring comprises a plurality of arc-shaped segments, each of the plurality of arc-shaped segments is slidably connected to the body, and each of the plurality of arc-shaped segments is configured to reciprocate along the radial direction of the accommodating hole.

8. The radiation scanning device according to claim 7, wherein a positioning hole is formed in an area corresponding to each of the plurality of arc-shaped segments on the body, the positioning hole communicates with the accommodating hole, each of the plurality of arc-shaped segments comprises a convex portion inserted into the positioning hole, the second limiting component further comprises a reset member arranged in the positioning hole, and the reset member abuts against the convex portion.

9. The radiation scanning device according to claim 8, wherein the reset member comprises a spring and a spring seat connected to the spring, the spring seat is connected to the body, and the spring is arranged between the convex portion and the spring seat.

10. The radiation scanning device according to claim 5, wherein the second limiting component further comprises a pressure sensor arranged on the hole wall of the accommodating hole.

11. The radiation scanning device according to claim 1 or 2, further comprising a first magnetic component and a second magnetic component, which are configured to be attracted to each other, wherein the first magnetic component is arranged on the horizontal supporting arm, and the second magnetic component is arranged on the vertical detection arm.

12. A vehicle-mounted radiation inspection system, comprising a vehicle body and the radiation scanning device according to any one of claims 1-11 arranged on the vehicle body.
